# EUROPÄISCHE PATENTSCHRIFT

(11) **EP 4 114 737 B1**
(45) Veröffentlichungstag und Bekanntmachung des Hinweises auf die Patenterteilung: **21.08.2024**
(21) Anmeldenummer: 21715133.1
(22) Anmeldetag: 02.03.2021
(51) Int. Cl.: B64D 11/06, B60N 2/75, E05D 11/00, A47C 7/54

(54) **MITTELLEHNE FUER EINER FLUGGASTSITZREIHE**
MIDDLE ARMREST FOR A ROW OF SEATS OF PASSENGER AIRCRAFT
ACCOUDOIR CENTRAL POUR UNE RANGEE DE SIÈGES D'UN AVION DE LIGNE

(30) Priorität: 05.03.2020 DE 102020106034
(43) Veröffentlichungstag der Anmeldung: 11.01.2023
(73) Patentinhaber: ZIM Aircraft Seating GmbH, 88090 Immenstaad am Bodensee (DE)
(72) Erfinder: CHIRAYIL, Abhilash Dominic, 88048 Friedrichshafen (DE); JENSEN, Alexander, 88046 Friedrichshafen (DE)
(74) Vertreter: Otten, Roth, Dobler & Partner mbB Patentanwälte
(86) Internationale Anmeldenummer: PCT/EP2021/055125
(87) Internationale Veröffentlichungsnummer: WO 2021/175820

(56) Entgegenhaltungen:
- DE-A1- 102014 119 600
- GB-A- 2 458 819
- KR-B1- 101 601 522
- US-A- 1 500 524
- US-A1- 2014 217 798

## Beschreibung

### Stand der Technik

Scharniere sind in vielfältigen Ausführungsformen und für vielfältige Anwendungen bekannt. Eine der bekanntesten Ausführungsformen für ein Scharnier ist ein Türscharnier. Das Türscharnier verbindet eine bewegliche Tür oder Klappe mit einem feststehenden Türrahmen, wobei die Tür mittels des Scharniers beweglich am Türrahmen gelagert ist.

Außerdem bekannt ist ein sogenanntes Doppelscharnier mittels welchem zwei voneinander getrennt vorhandene Türen oder Klappen jeweils getrennt beweglich mit einem feststehenden Element, z.B. einem Rahmen, verbindbar sind.

Auch sind Mittellehnen für eine Fluggastsitzreihe bekannt, welche ein Scharnier aufweisen. Beispielsweise beschreiben die US 2014/217798 A1 und die US 1500524 A Armlehneneinheiten

### Aufgabe und Vorteile der Erfindung

Der Erfindung liegt die Aufgabe zugrunde eine verbesserte Mittellehne einer Fluggastsitzreihe mit einem Scharnier bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Mittellehne einer Fluggastsitzreihe mit einem Scharnier und mit einer Armauflage aus, wobei die Armauflage beweglich am Scharnier angelenkt ist, wobei die Mittellehne eine Aufbewahrungsfläche aufweist, welche sich in einer Aufbewahrungsebene erstreckt, wobei das Scharnier im Bereich der Aufbewahrungsfläche über das Montageorgan an der Mittellehne angeordnet ist, wobei die Aufbewahrungsebene von der Lagerebene der Rotationsachsen beabstandet vorhanden ist, wobei das Scharnier ein Mittenelement und zwei Flügelelemente aufweist, wobei ein erstes Flügelelement um eine erste Rotationsachse drehbar am Mittenelement angelenkt ist, wobei ein zweites Flügelelement um eine zweite Rotationsachse drehbar am Mittenelement angelenkt ist, wobei das erste Flügelelement ein Montageelement aufweist, um einen Flügel oder eine Klappe anzuordnen, wobei das zweite Flügelelement ein weiteres Montageelement aufweist, um einen weiteren Flügel oder eine weitere Klappe anzuordnen, wobei das Scharnier ein Montageorgan aufweist, um das Mittenelement an einem Fluggastsitz zu befestigen, sodass im montierten Zustand des Scharniers am Fluggastsitz und im angeordneten Zustand der Flügel oder der Klappen, die Flügel oder die Klappen relativ zum verbleibenden Fluggastsitz beweglich vorhanden sind, wobei die erste und die zweite Rotationsachse in einer Lagerebene sich erstreckend und voneinander beabstandet am Scharnier vorhanden sind.

Bevorzugterweise ist das Scharnier als ein Doppelscharnier vorhanden. Beispielsweise ist das Scharnier als ein Beschlag, z.B. als ein Tischscharnier, insbesondere als ein Flugzeugtischscharnier ausgebildet. Vorteilhafterweise ist das Scharnier aus Metall oder Kunststoff oder einer Kombination der Materialien vorhanden.

Vorteilhafterweise ist das Mittenelement drehbeweglich zum ersten und drehbeweglich zum zweiten Flügelelement vorhanden. Beispielsweise sind das erste und das zweite Flügelelement unabhängig voneinander relativ zum Mittenelement drehbeweglich vorhanden. Vorteilhafterweise erstrecken sich die erste und die zweite Rotationsachse in eine gleiche Richtung. Beispielsweise erstrecken sich die erste und die zweite Rotationsachse zueinander parallel. Beispielsweise erstrecken sich die erste und die zweite Rotationsachse in einer gleichen Lagerebene. Denkbar ist, dass die erste Rotationsachse in einem Bereich einer ersten Seite des Mittenelements ausgebildet ist und die zweite Rotationsachse in einem Bereich einer zweiten Seite des Mittenelements vorhanden ist, wobei die erste und die zweite Seite des Mittenelements gegenüberliegend und voneinander beabstandet vorhanden sind. Beispielweise ist das Mittenelement als eine Platte vorhanden und die erste Seite des Mittenelements ist eine erste Schmalseite der Platte und die zweite Seite des Mittenelements ist eine weitere Schmalseite der Platte. Vorteilhafterweise erstreckt sich die erste Rotationsachse entlang einer Längserstreckung der ersten Seite des Mittenelements und die zweite Rotationsachse entlang einer Längserstreckung der zweiten Seite des Mittenelements.

Beispielsweise ist das Mittenelement, das erste Flügelelement und/oder das zweite Flügelelement plättchenartig ausgebildet, z.B. als ein Plättchen oder eine Platte vorhanden.

Bevorzugterweise ist das Montageelement als eine Bohrung, als ein Loch, als ein Stift, als ein Bolzen, als ein Klebeelement, zum Beispiel als ein Kleber, und/oder als eine Klemme ausgebildet. Beispielweise ist der Flügel oder die Klappe an ein Flügelelement des Scharniers lösbar montierbar. Denkbar ist jedoch auch, dass ein Flügel oder ein Klappe mit einem der Flügelelemente des Scharniers unlösbar verbindbar ist. Beispielsweise sind die Flügelelemente in einer Weise ausgebildet, dass ein Flügel oder eine Klappe an ein Flügelelement angeklemmt, angeschraubt, angeklebt und/oder angeklipst werden kann.

Vorteilhafterweise ist der Flügel oder die Klappe plattenartig vorhanden, insbesondere als eine Platte ausgebildet. Denkbar ist, dass der Flügel oder die Klappe als eine Auflage, zur Auflage eines Arms eines Nutzers, zum Beispiel zur Auflage eines Arms eines Nutzers eines Fluggastsitzes, ausgebildet ist. Zum Beispiel ist der Flügel oder die Klappe als eine Armauflage, z.B. als eine Armlehnenauflage, vorhanden. Beispielsweise ist der Flügel oder die Klappe zweiteilig ausgebildet. Denkbar ist, dass der Flügel oder die Klappe derart ausgebildet sind, dass im montierten Zustand des Flügels oder der Klappe an einem der Flügelelemente, der Flügel oder die Klappe das Flügelelement an fünf Seiten umschließt.

Der Kern der Erfindung ist darin zu sehen, dass das erste Flügelelement mit einer insbesondere einzigen ersten Buchse am Mittenelement angelenkt ist, wobei die erste Buchse des ersten Flügelelements entlang der ersten Rotationsachse zwischen einer zweiten und einer dritten Buchse des Mittenelements vorhanden ist, wobei die erste bis dritte Buchse an einer ersten Welle des Scharniers gelagert sind, wobei das zweite Flügelelement mit einer insbesondere einzigen vierten Buchse am Mittenelement angelenkt ist, wobei die vierte Buchse des ersten Flügelelements entlang der zweiten Rotationsachse zwischen einer fünften und einer sechsten Buchse des Mittenelements vorhanden ist, wobei die vierte bis sechste Buchse an einer zweiten Welle des Scharniers gelagert sind. Hierdurch ist das Scharnier vergleichsweise stabil ausgebildet.

Bevorzugterweise ist die erste Rotationsachse als Drehachse der ersten Welle vorhanden. Beispielsweise ist die zweite Rotationsachse als Drehachse der zweiten Welle ausgebildet.

Vorteilhafterweise sind die erste, die zweite und die dritte Buchse an der ersten Welle des Scharniers drehbar gelagert. Beispielsweise sind die erste, die zweite und/oder die dritte Buchse relativ zur ersten Welle beweglich vorhanden. Denkbar ist auch, dass die zweite und die dritte Buchse positionsfest mit der Welle verbunden sind. Beispielsweise ist die erste Buchse positionsfest mit der Welle verbunden. Vorteilhafterweise sind die zweite und die dritte Buchse positionsfest am Mittenelement vorhanden, sodass die zweite und die dritte Buchse gemeinsam, insbesondere gleichzeitig, relativ zur ersten Buchse beweglich vorhanden sind. Beispielsweise sind die zweite und die dritte Buchse positionsfest mit dem Mittenelement verbunden.

Vorteilhafterweise sind die vierte, die fünfte und die sechste Buchse an der zweiten Welle des Scharniers drehbar gelagert. Beispielsweise sind die vierte, die fünfte und/oder die sechste Buchse relativ zur zweiten Welle beweglich vorhanden. Denkbar ist auch, dass die fünfte und die sechste Buchse positionsfest mit der Welle verbunden sind. Beispielsweise ist die vierte Buchse positionsfest mit der Welle verbunden. Vorteilhafterweise sind die fünfte und die sechste Buchse positionsfest am Mittenelement vorhanden, sodass die fünfte und die sechste Buchse gemeinsam, insbesondere gleichzeitig, relativ zur vierten Buchse beweglich vorhanden sind. Beispielsweise sind die fünfte und die sechste Buchse positionsfest mit dem Mittenelement verbunden. Zum Beispiel ist die erste Buchse positionsfest am ersten Flügelelement ausgebildet, beispielsweise positionsfest mit dem ersten Flügelelement verbunden. Beispielsweise ist die vierte Buchse positionsfest am zweiten Flügelelement vorhanden, zum Beispiel positionsfest mit dem zweiten Flügelelement verbunden.

Denkbar ist, dass das Mittenelement und die zweite Buchse und die dritte Buchse einstückig ausgebildet sind. Vorstellbar ist auch, dass das Mittenelement und die fünfte Buchse und die sechste Buchse einstückig ausgebildet sind. Zum Beispiel ist die erste Buchse einstückig am ersten Flügelelement und/oder die vierte Buchse einstückig mit dem zweiten Flügelelement vorhanden.

Bevorzugterweise umschließen oder umgreifen die erste Buchse, die zweite Buchse und/oder die dritte Buchse die erste Welle vollständig, insbesondere umfänglich um die Drehachse der ersten Welle. Vorteilhafterweise umschließen oder umgreifen die vierte Buchse, die fünfte Buchse und/oder die sechste Buchse die zweite Welle vollständig, insbesondere umfänglich um die Drehachse der zweiten Welle.

Vorteilhafterweise bilden die erste Buchse, die zweite Buchse und die dritte Buchse zusammen mit der ersten Welle ein erstes Drehgelenk. Beispielsweise bilden die vierte Buchse, die fünfte Buchse und die sechste Buchse zusammen mit der zweiten Welle ein zweites Drehgelenk. Beispielsweise umfasst das Scharnier genau zwei Drehgelenke.

Von Vorteil erweist sich auch, dass das Scharnier ein Verbindungsorgan aufweist, welches in einer Haupterstreckungsrichtung quer zur Lagerebene der Rotationsachsen sich erstreckend vorhanden ist, wobei an einem ersten Ende des Verbindungsorgans das Mittenelement angeordnet ist, wobei an einem zweiten Ende des Verbindungsorgans das Montageorgan vorhanden ist. Vorteilhafterweise sind das erste und das zweite Ende des Verbindungsorgans zueinander beabstandet und gegenüberliegend vorhanden.

Bevorzugterweise sind das Montageorgan und das Verbindungsorgan einstückig ausgebildet. Vorteilhafterweise sind das Montageorgan, das Verbindungsorgan und das Mittenelement einstückig ausgebildet. Beispielsweise verbindet das Verbindungsorgan das Mittenelement und das Montageorgan miteinander. Zum Beispiel ist das Verbindungsorgan plattenartig, z.B. als eine Platte ausgebildet. Vorteilhafterweise erstreckt sich das Verbindungsorgan mit einer Länge entlang einer Längserstreckung des Mittenelements. Beispielsweise erstrecken sich die Rotationsachsen in Richtung, insbesondere parallel zur Längserstreckung des Mittenelements. Beispielsweise ist das Verbindungsorgan in einer Richtung quer zur Längserstreckung des Mittenelements zwischen der zweiten und/oder der dritten Buchse und der fünften und/oder der sechsten Buchse am Mittenelement angeordnet.

Vorteilhafterweise umfasst das Verbindungsorgan eine Ausnehmung, insbesondere eine einzige Ausnehmung. Beispielsweise ist die Ausnehmung am Verbindungsorgan als eine Vertiefung an einer ersten Seite des Verbindungsorgans vorhanden. Beispielsweise erstreckt sich die Vertiefung in einer ersten Richtung in einem Bereich zwischen dem Mittenelement und dem Montageorgan und in einer zweiten Richtung in Richtung Längserstreckung des Mittenelements und/oder in Richtung Erstreckung der Rotationsachse, wobei die erste Richtung und die zweite Richtung quer zueinander ausgerichtet vorhanden sind. Hierdurch ist ein Gewicht des Scharniers vermindert, wobei vorteilhafterweise eine Stabilität des Scharniers vergleichsweise erhalten bleibt. Denkbar ist auch, dass das Verbindungsorgan zwei Ausnehmungen aufweist, wobei eine erste Ausnehmung an der ersten Seite des Verbindungsorgans und eine zweite Ausnehmung an einer zweiten Seite des Verbindungsorgans ausgebildet sind, wobei die erste und die zweite Seite des Verbindungsorgans gegenüberliegend und beabstandet vorhanden sind.

Von Vorteil erweist sich auch, dass das Montageorgan sich in einer Ebene quer zur Haupterstreckungsebene des Verbindungsorgans erstreckt, sodass das Montageorgan und das Verbindungsorgan T-förmig vorhanden sind. Vorteilhafterweise sind das Mittenelement, das Verbindungsorgan und das Montageorgan doppel-T-förmig ausgebildet. Vorstellbar ist außerdem, dass das Mittenelement, das Verbindungsorgan und das Montageorgan in einer Weise ausgebildet und zueinander angeordnet sind, dass die drei Elemente zusammen mindestens eine Symmetrieebene aufweisen, insbesondere genau eine Symmetrieebene.

Bevorzugterweise umfasst das Montageorgan eine Bohrung, z.B. eine Durchgangsbohrung, ein Loch, z.B. ein Durchgangsloch, einen Stift, einen Bolzen, ein Klebeelement, zum Beispiel einen Kleber, und/oder eine Klemme, um das Scharnier am Fluggastsitz, z.B. an einer Mittellehne eines Fluggastsitzes, zu befestigen. Beispielweise ist das Scharnier lösbar am Fluggastsitz, z.B. an der Mittellehne der Fluggastsitzes, montierbar. Denkbar ist jedoch auch, dass das Scharnier mit dem Fluggastsitz, z.B. mit der Mittellehne des Fluggastsitzes, unlösbar verbindbar ist. Beispielsweise ist das Montageorgan in einer Weise ausgebildet, dass das Scharnier an den Fluggastsitz, z.B. an die Mittellehne des Fluggastsitzes, angeklemmt, angeschraubt, angeklebt und/oder angeklipst werden kann.

Ebenfalls von Vorteil erweist sich, dass das Mittenelement ein erstes und ein zweites Anschlagorgan aufweist, wobei in einer ersten Position des ersten Flügelelements das erste Flügelelement am ersten Anschlagorgan ansteht und in einer ersten Position des zweiten Flügelelements das zweite Flügelelement am zweiten Anschlagorgan ansteht. Hierdurch begrenzen die Anschlagorgane eine Bewegung der Flügelelemente relativ zum Mittenelement in der ersten Position.

Beispielsweise umfasst ein Flügelelement ein Anlageorgan, z.B. zwei Anlageorgane. Vorteilhafterweise steht und/oder liegt das erste Flügelelement mit einem Anlageorgan, insbesondere mit beiden Anlageorganen in der ersten Position des ersten Flügelelements am ersten Anschlagorgan des Mittenelements an. Zum Beispiel steht und/oder liegt das zweite Flügelelement mit einem Anlageorgan, insbesondere mit beiden Anlageorganen in der ersten Position des zweiten Flügelelements am zweiten Anschlagorgan des Mittenelements an.

Vorteilhafterweise ist ein Anschlagorgan und/oder ein Anlageorgan als eine Anschlagfläche und/oder als eine Anlagefläche ausgebildet. Beispielsweise erstreckt sich ein Anschlagorgan in Richtung einer Erstreckung einer Rotationsachse gesehen zwischen der zweiten und der dritten Buchse. Vorteilhafterweise begrenzt das Anlageorgan eine Erstreckung der ersten Buchse in Richtung einer Erstreckung einer Rotationsachse.

Auch ist es von Vorteil, dass das Mittenelement ein erstes und ein zweites Anschlagelement aufweist, wobei in einer zweiten Position der Flügelelemente das erste Flügelelement am ersten Anschlagelement und das zweite Flügelelement am zweiten Anschlagelement ansteht. Hierdurch begrenzen die Anschlagelemente eine Bewegung der Flügelelemente relativ zum Mittenelement in der zweiten Position.

Beispielsweise umfasst ein Flügelelement ein Anlageelement, z.B. zwei Anlageelemente. Vorteilhafterweise steht und/oder liegt das erste Flügelelement mit einem Anlageelement, insbesondere steht und/oder liegt das erste Flügelelement mit beiden Anlageelementen in der zweiten Position des ersten Flügelelements am ersten Anschlagelement des Mittenelements an. Zum Beispiel steht und/oder liegt das zweite Flügelelement mit einem Anlageelement, insbesondere steht und/oder liegt das zweite Flügelelement mit beiden Anlageelementen in der zweiten Position des zweiten Flügelelements am zweiten Anschlagelement des Mittenelements an.

Vorteilhafterweise ist ein Anschlagelement und/oder ein Anlageelement als eine Anschlagfläche und/oder als eine Anlagefläche ausgebildet. Beispielsweise erstreckt sich ein Anschlagelement in Richtung einer Erstreckung einer Rotationsachse gesehen zwischen der zweiten und der dritten Buchse. Vorteilhafterweise begrenzt das Anlageelement eine Erstreckung der ersten Buchse in Richtung einer Erstreckung einer Rotationsachse.

Vorteilhafterweise ist das erste Flügelelement und/oder das zweite Flügelelement zwischen der ersten und der zweiten Position um weniger als 180° um die erste bzw. die zweite Rotationsachse drehbar vorhanden. Bevorzugterweise ist das erste und/oder das zweite Flügelelement zwischen dem ersten Anschlagorgan und dem ersten Anschlagelement in einem Winkelbereich von weniger als 180° um die erste Rotationsachse drehbar vorhanden. Beispielsweise ist das erste und/oder das zweite Flügelelement zwischen der ersten und der zweiten Position in einem Winkelbereich von genau 90° um die erste bzw. die zweite Rotationsachse drehbar vorhanden. Bevorzugterweise ist das erste und/oder das zweite Flügelelement zwischen dem ersten Anschlagorgan und dem ersten Anschlagelement um einen Winkel von genau 90° um die erste bzw. die zweite Rotationsachse drehbar vorhanden.

Vorteilhafterweise ist das erste Flügelelement zwischen der ersten und der zweiten Position in einem Winkelbereich zwischen 0° und 210° drehbar vorhanden. Z.B. ist das erste Flügelelement zwischen der ersten und der zweiten Position in einem Winkelbereich zwischen 0° und 190°, zwischen 0° und 180°, zwischen 0° und 175°, zwischen 0° und 170° oder zwischen 0° und 160° drehbar vorhanden. Vorteilhafterweise ist das zweite Flügelelement zwischen der ersten und der zweiten Position in einem Winkelbereich zwischen 0° und 210° drehbar vorhanden. Z.B. ist das zweite Flügelelement zwischen der ersten und der zweiten Position in einem Winkelbereich zwischen 0° und 190°, zwischen 0° und 180°, zwischen 0° und 175°, zwischen 0° und 170° oder zwischen 0° und 160° drehbar vorhanden.

Beispielsweise schließen das erste und das zweite Flügelelement in der zweiten Position einen Winkel von 0° ein. Vorteilhafterweise schließen das erste und das zweite Flügelelement in der zweiten Position einen Winkelbereich zwischen 0° und 30°, eine Winkelbereich zwischen 0° und 25°, einen Winkelbereich zwischen 0° und 20°, einen Winkelbereich zwischen 0° und 15°, einen Winkelbereich zwischen 0° und 10° oder einen Winkelbereich zwischen 0° und 5° ein. Vorteilhafterweise schließt eine Haupterstreckungsebene des ersten Flügelelements und eine Haupterstreckungsebene des zweiten Flügelelements den Winkel ein.

Erfindungsgemäß ist eine Mittellehne einer Fluggastsitzreihe mit einem Scharnier nach einer der vorangegangen genannten Varianten und einer Armauflage ausgebildet, wobei die Armauflage beweglich am Scharnier angelenkt ist. Vorteilhafterweise ist die Armauflage beweglich an der Mittellehne vorhanden. Bevorzugterweise ist die Armauflage mittels des Scharniers beweglich gelagert vorhanden. Beispielsweise ist die Armauflage mit einem Flügelelement des Scharniers positionsfest verbindbar. Bevorzugterweise umfasst die Mittellehne insbesondere genau zwei Scharniere. Denkbar ist, dass die Scharniere an der Mittellehne voneinander beabstandet angeordnet sind.

Bevorzugterweise ist eine Armauflage zweiteilig ausgebildet. Beispielsweise umfasst eine Armauflage ein Armauflagenunterteil und ein Armauflagenoberteil. Beispielsweise umschließen das Armauflagenoberteil und das Armauflagenunterteil im angeordneten Zustand am Scharnier ein Flügelelement. Vorstellbar ist weiterhin, dass die Armauflage ausgebildet ist, dass ein Polsterelement an die Armauflage angeordnet werden kann. Z.B. ist ein Polsterelement an das Armauflagenoberteil anordenbar. Vorstellbar ist auch, dass die Armauflage das Polsterelement umfasst.

Vorteilhafterweise sind insbesondere genau zwei Armauflagen beweglich am Scharnier angelenkt. Vorteilhafterweise ist eine erste Armauflage am ersten Flügelelement und eine zweite Armauflage am zweiten Flügelelement befestigt.

Erfindungsgemäß weist die Mittellehne eine Aufbewahrungsfläche auf, welche sich in einer Aufbewahrungsebene erstreckt, wobei das Scharnier über das Montageorgan an der Mittellehne angeordnet ist, wobei das Scharnier im Bereich der Aufbewahrungsfläche angeordnet ist, wobei die Aufbewahrungsebene von der Lagerebene der Rotationsachsen beabstandet vorhanden ist. Hierdurch ist die Mittellehne in einer Weise vorhanden, dass Lagerraum für Utensilien, z.B. für ein Mobiltelefon eines Nutzers des Fluggastsitzes, an welchem die Mittellehne anordenbar ist, geschaffen ist. Vorteilhafterweise sind die Aufbewahrungsebene und die Lagerebene zueinander parallel ausgerichtet vorhanden. Vorteilhafterweise ist die Mittellehne derart ausgebildet, dass zwischen der Aufbewahrungsfläche und einer Armlehne in der ersten Position und/oder in der zweiten Position der Armlehne ein Freiraum vorhanden ist, wobei der Freiraum derart ausgebildet ist, dass ein Mobiltelefon und/oder eine Brille zwischen Aufbewahrungsfläche und Armlehne anordenbar ist.

Außerdem von Vorteil ist, das die Mittellehne insbesondere genau zwei Aufbewahrungsflächen aufweist, welche sich in der selben Aufbewahrungsebene erstrecken und voneinander beabstandet vorhanden sind. Vorteilhafterweise sind die Aufbewahrungsebenen durch das Scharnier beabstandet vorhanden. Vorstellbar ist, dass die Mittellehne an einer Fluggastsitzreihe, z.B. an einem Fluggastdoppelsitz, anordenbar ist, sodass die Mittellehne zwei Fluggastsitze voneinander trennt. Beispielsweise bildet die Mittellehne im angeordneten Zustand am Fluggastsitz eine Armauflage für einen ersten und einen zweiten Fluggastsitz der Fluggastsitzreihe. Vorstellbar ist, dass jeweils eine Aufbewahrungsfläche für einen Nutzer eines Fluggastsitzes der Fluggastsitzreihe an der Mittellehne vorhanden ist.

Auch ist es von Vorteil, dass das Verbindungsorgan des Scharniers von der Aufbewahrungsebene abstehend vorhanden ist. Hierdurch ist eine Auflagefläche der Armauflage beabstandet zur Aufbewahrungsebene vorhanden. Beispielsweise erstreckt sich das Verbindungsorgan des Scharniers in eine Richtung quer zu den Aufbewahrungsebenen an der Mittellehne.

Ebenfalls ist es von Vorteil, dass die Mittellehne zwei Armauflagen aufweist, wobei die Mittellehne zwei Anschlagorgane aufweist, wobei jeweils eine Armauflage in einer ersten Position an jeweils einem Anschlagorgan anliegt, wobei jede Armauflage eine Auflagefläche aufweist, wobei die Auflageflächen sich in der ersten Position der Armauflagen in Richtung der Lagerebene erstrecken. Vorteilhafterweise ist durch die Anschlagorgane der Mittellehne eine Abstützung der Armauflage in der ersten Position der Armauflage realisiert. Beispielsweise ist das Anschlagorgan der Mittellehne als ein Begrenzungsorgan ausgebildet, wobei das Begrenzungsorgan eine Bewegung der Armauflage von der zweiten Position der Armauflage in die erste Position der Armauflage begrenzt. Zum Beispiel definiert das Begrenzungsorgan, z.B. zusammen mit dem Anschlagorgan des Scharniers, die erste Position der Armauflage.

Vorteilhafterweise erstrecken sich die Armauflagen in der ersten Position in der Lagerebene.

Die Auflagefläche der Armauflage bildet vorteilhafterweise eine Ebene zur Auflage eines Arms eines Nutzers des Sitzes als Armstütze oder Armlehne. Vorteilhafterweise bildet das Polsterelement im angeordneten Zustand an der Armauflage eine Auflagefläche für einen Arm eines Nutzers.

Von Vorteil ist es auch, dass die Mittellehne zwei Armauflagen aufweist, wobei die beiden Armauflagen jeweils in eine zweite Position bewegbar vorhanden sind, wobei in der jeweiligen zweiten Position die beiden Armauflagen aneinander anstehend vorhanden sind. Beispielsweise liegen die Armauflagen mit ihren Polsterelemente, insbesondere mit den Auflageflächen, in der zweiten Position aneinander an. Denkbar ist auch, dass die Armauflagen, insbesondere die Auflageflächen, in der zweiten Position beabstandet voneinander vorhanden sind. Beispielsweise erstrecken sich die Auflageflächen der Armauflagen in der zweiten Position in eine gleiche Richtung, z.B. sind die Auflageflächen der Armauflage in der zweiten Position zueinander parallel ausgerichtet vorhanden. Beispielsweise erstreckt sich eine Auflageebene einer der Auflageflächen in der zweiten Position der Armauflage quer zur Lagerebene des Scharniers und/oder quer zur Aufbewahrungsebene der Aufbewahrungsfläche der Mittellehne.

Eine vorteilhafte Modifikation der Erfindung ist ein Fluggastsitz, insbesondere ein Fluggastdoppelsitz, mit einer Mittellehne nach einer der vorangegangen genannten Varianten. Beispielsweise ist der Fluggastsitz als eine Fluggastsitzreihe vorhanden. Denkbar ist, dass die Fluggastsitzreihe, zwei oder mehr Sitzmöglichkeiten für Nutzer bereitstellt. Denkbar ist, dass die Fluggastsitzreihe genau zwei oder genau drei Sitzmöglichkeiten für Nutzer bereitstellt, z.B. in Form eines Fluggastdoppelsitz oder in Form eines Fluggastdreiersitz. Bevorzugterweise umfasst die Fluggastsitzreihe zwei oder mehr Fluggastsitze, welche beispielsweise miteinander verbunden, insbesondere miteinander untrennbar verbunden vorhanden sind. Vorteilhafterweise ist die Mittellehne zwischen zwei Fluggastsitzen einer Fluggastsitzreihe und/oder zwischen zwei Fluggastsitzen des Fluggastdoppelsitzes vorhanden. Bevorzugterweise ist die Mittellehne als ein Trennelement, z.B. als eine Armlehne und/oder als ein Trenner, zwischen zwei Fluggastsitzen einer Fluggastsitzreihe und/oder des Fluggastdoppelsitzes vorhanden.

Eine mögliche Ausführungsform der Erfindung ist ein Flugzeug mit einem Fluggastsitz nach einer der vorangegangen genannten Variante.

### Figurenbeschreibung

Ein Ausführungsbeispiel wird anhand der nachstehenden schematischen Zeichnungen unter Angabe von weiteren Einzelheiten und Vorteilen näher erläutert.

Es zeigen:
- Figur 1: in einer perspektivischen Ansicht von schräg vorne eine Sitzreihe mit zwei Fluggastsitzen jeweils umfassend einen Sitzboden, eine Rückenlehne samt rückseitiger Umhausung, Mittellehne und eine Beinauflage,
- Figur 2: eine perspektivische Ansicht von vorne, seitlich rechts, oben auf ein erfindungsgemäßes Scharnier mit Flügelelementen des Scharniers in einer zweiten Position,
- Figur 3: eine weitere perspektivische Ansicht von vorne, seitlich rechts, oben auf das Scharnier gemäß Figur 2 mit Flügelelementen des Scharniers in einer ersten Position,
- Figur 4: das Scharnier gemäß Figur 2, wobei ein Flügelelement des Scharniers unsichtbar gehalten ist,
- Figur 5: das Scharnier gemäß Figur 4, wobei zusätzlich zum Flügelelement eine Welle des Scharniers unsichtbar gehalten ist,
- Figur 6: eine weitere perspektivische Ansicht auf das Scharnier gemäß Figur 2, wobei beide Flügelelement und beide Wellen des Scharniers unsichtbar gehalten sind,
- Figur 7: eine weitere perspektivische Ansicht von vorne, seitlich links, oben auf das Scharnier gemäß der Ausbildung von Figur 6,
- Figur 8: eine Draufsicht auf das Scharnier gemäß Figur 2,
- Figur 9: eine Schnittansicht C-C durch das Scharnier, gemäß des in Figur 8 eingezeichneten Schnitts C-C,
- Figur 10: eine perspektivische Ansicht von schräg seitlich oben auf ein Flügelelement des Scharniers mit angeordneter Welle,
- Figur 11: eine perspektivische Teil-Ansicht von schräg seitlich vorne der Mittellehne der Sitzreihe gemäß Figur 1,
- Figur 12: eine seitliche Teil-Ansicht der Mittellehne gemäß Figur 11,
- Figur 13: eine perspektivische Teil-Ansicht der Mittellehne gemäß Figur 11, wobei ein Armauflageoberteil mit Polsterelement eine Armlehne der Mittellehne unsichtbar gehalten ist,
- Figur 14: eine perspektivische Teil-Ansicht der Mittellehne gemäß Figur 11, wobei eine Armlehne der Mittellehne unsichtbar gehalten ist,
- Figur 15: eine perspektivische Teil-Ansicht der Mittellehne gemäß Figur 11, wobei die Armlehne der Mittellehne und ein Blendenelement der Mittellehne, welche eine Aufbewahrungsfläche umfasst, unsichtbar gehalten ist,
- Figur 16: eine Frontansicht auf ein Scharnier mit angeordneten Armlehnen in einer zweiten Position des Scharniers,
- Figur 17: eine perspektivische Teil-Ansicht von vorne oben auf eine Mittellehne, wobei eine Armauflage sich in einer ersten Position befindet und eine weitere Armauflage in einer zweiten Position und
- Figur 18: eine perspektivische Teil-Ansicht von vorne oben auf eine Mittellehne, wobei beide Armauflage der Mittellehne sich in einer ersten Position befinden.

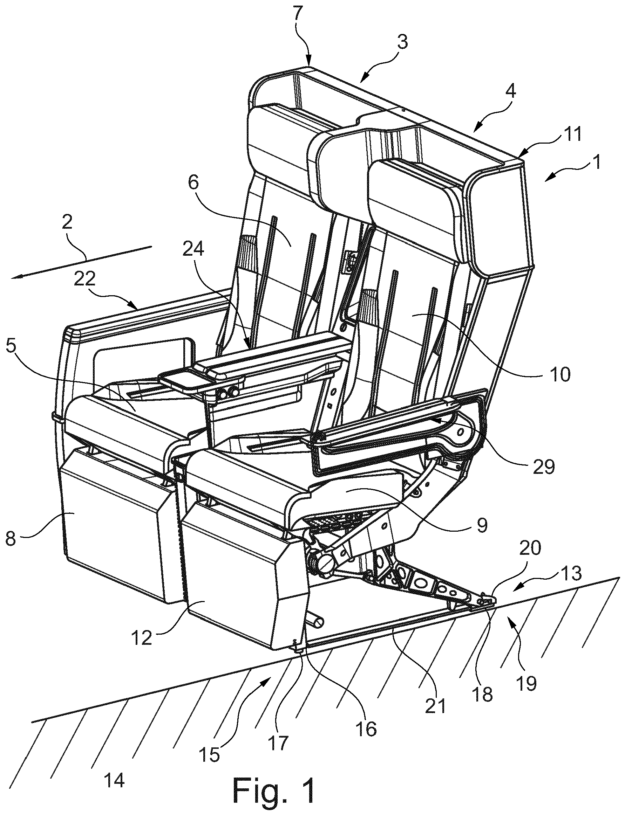

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare oder schwenkbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Beispielsweise sind die Fluggastsitze 3 und 4 über zwei Stützbeine 13 (nur einer sichtbar) an einem Kabinenboden 14 einer Flugkabine eines dazugehörigen Flugzeuges (nicht gezeigt) montierbar. Das Stützbein 13 weist hierfür an einem unteren Endbereich 15 einer vorderen Strebe 16 eine Montagestelle 17 und eine weitere Montagestelle 18 an einem unteren Endbereich 19 einer hinteren Strebe 20 auf. Zwischen den Endbereichen 15 und 19 ist ein Verstrebungselement 21 vorgesehen.

Bevorzugterweise weist die Sitzreihe 1 zudem eine äußere Armlehne 22 seitlich am Fluggastsitz 3 und eine äußere Armlehne 23 seitlich am Fluggastsitz 4 auf. Zwischen den beiden Fluggastsitzen 3 und 4 ist vorzugsweise auf Höhe der beiden äußeren Armlehnen 22 und 23 eine Mittellehne 24 vorhanden, welche eine Armauflage für einen Fluggast bildet.

Vorteilhafterweise ist in einer Schalenform der jeweiligen Umhausung 7 bzw. 11 die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

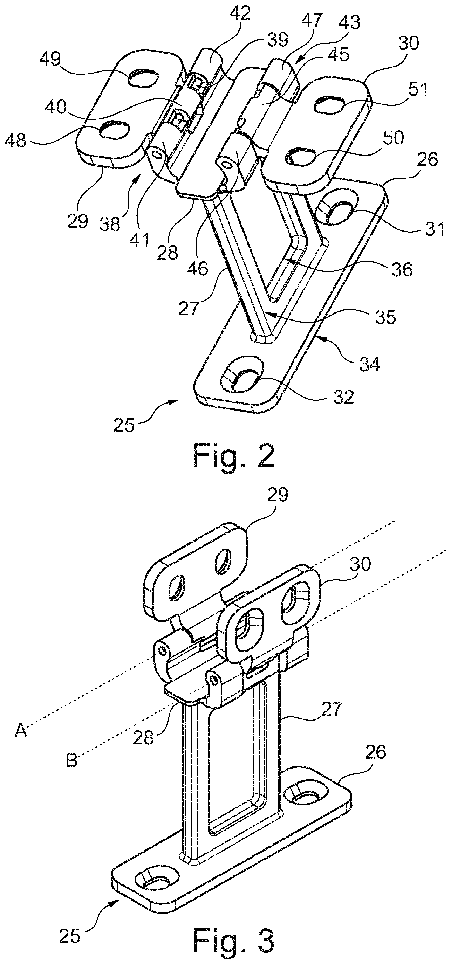

Figur 2 zeigt ein erfindungsgemäßes Scharnier 25 in einer perspektivischen Ansicht von schräg seitlich oben. Das Scharnier 25 umfasst ein Montageorgan 26, ein Verbindungsorgan 27, ein Mittenelement 28, ein erstes Flügelelement 29, sowie ein zweites Flügelelement 30.

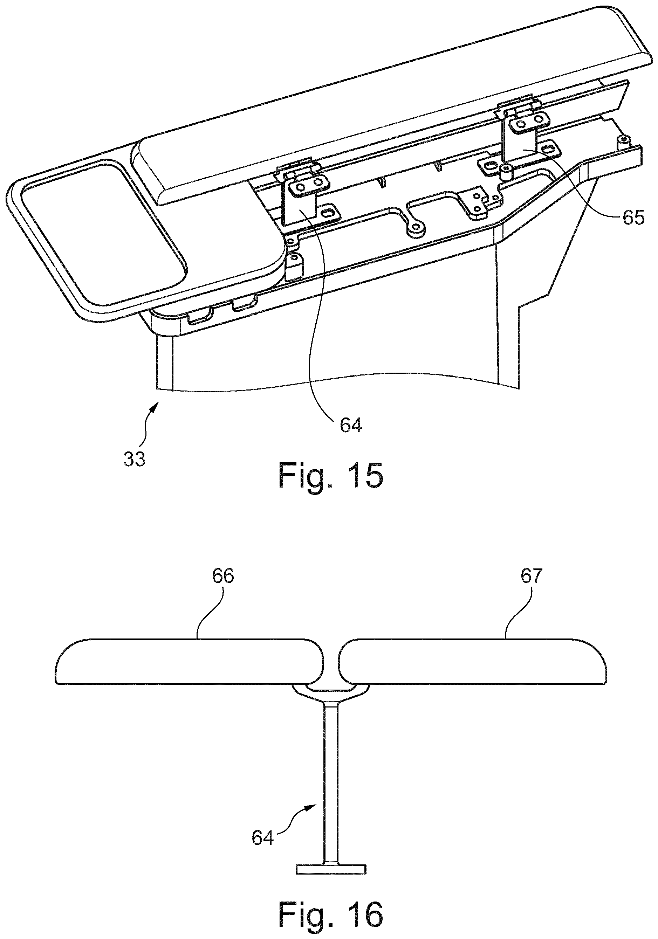

Vorteilhafterweise ist das Montageorgan 26 plattenförmig ausgebildet. Z.B. umfasst das Montageorgan 26 eine erste und eine zweite Durchgangsbohrung 31, 32, um das Scharnier 25 an einer Mittellehne 33 (siehe Figur 15), zum Beispiel mittels Schrauben (nicht gezeigt), zu befestigen. Bevorzugterweise umfasst und erstreckt sich das Montageorgan 26 entlang einer Befestigungsfläche 34, mittels welcher das Montageorgan 26 an der Mittelehne 33 anliegend montierbar ist.

Das Verbindungsorgan 27 ist vorteilhafterweise ebenfalls plattenförmig ausgebildet. Beispielsweise erstreckt sich eine Haupterstreckungsebene des Verbindungsorgans 27 zwischen dem Montageorgan 26 und dem Mittenelement 28. Bevorzugterweise ist die Haupterstreckungsebene des Verbindungsorgans 27 quer, insbesondere senkrecht zur Befestigungsfläche 34 des Montageorgans 26 vorhanden. Zum Beispiel umfasst das Verbindungsorgan 27 an einer Hauptseite 35 des Verbindungsorgans 27 eine Ausnehmung 36. Bevorzugterweise ist das Verbindungsorgan 27 an einer der Hauptseite 35 gegenüberliegenden und beabstandeten zweiten Hauptseite 37 insbesondere durchgehend flächig ausgebildet.

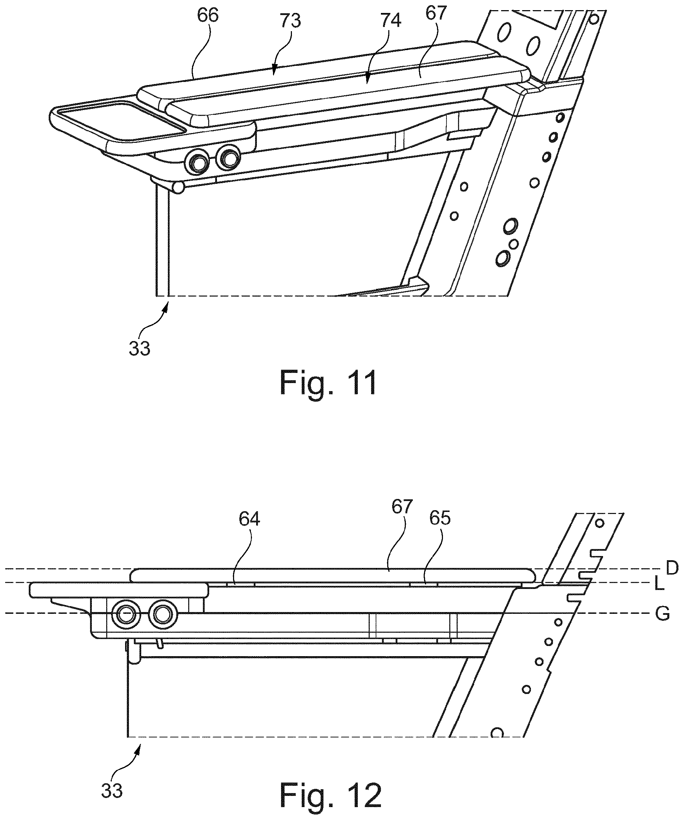

Das erste Flügelelement 29 umfasst zwei Montageelemente 48, 49, um eine Armauflage daran zu befestigen (siehe auch Figuren 11 bis 16). Das zweite Flügelelement 30 umfasst zwei Montageelemente 50, 51, um eine weitere Armauflage daran zu befestigen (siehe auch Figuren 11 bis 16).

Das erste Flügelelement 29 ist über ein Drehgelenk 38 drehbeweglich mit dem Mittenelement 28 verbunden. Das Drehgelenk 38 umfasst eine Welle 39, eine erste Buchse 40, eine zweite Buchse 41, sowie eine dritte Buchse 42. Vorteilhafterweise ist die erste Buchse 40 einstückig mit dem ersten Flügelelement 29 vorhanden. Bevorzugterweise sind die zweite und die dritte Buchse 41, 42 einstückig mit dem Mittenelement 28 ausgebildet. Vorteilhafterweise sind die erste, die zweite und die dritte Buchse 40 - 42 drehbar an der Welle 39 gelagert und über die Welle 39 miteinander verbunden.

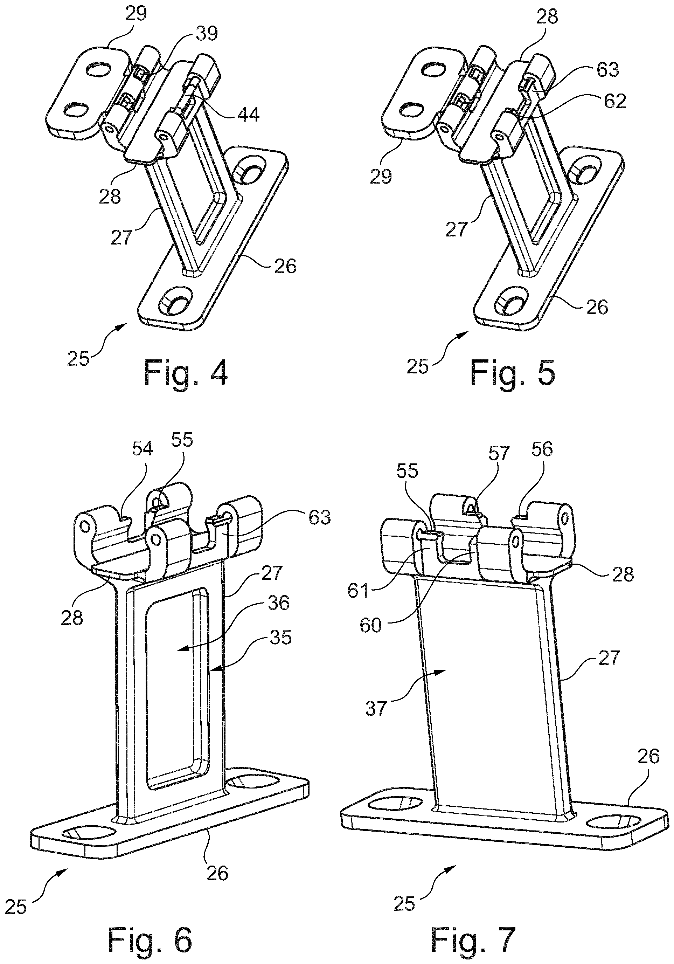

Das zweite Flügelelement 30 ist über ein Drehgelenk 43 drehbeweglich mit dem Mittenelement 28 verbunden. Das Drehgelenk 43 umfasst eine Welle 44 (siehe Figur 4), eine erste Buchse 45, eine zweite Buchse 46, sowie eine dritte Buchse 47. Vorteilhafterweise ist die erste Buchse 45 einstückig mit dem ersten Flügelelement 30 vorhanden. Bevorzugterweise sind die zweite und die dritte Buchse 46, 47 einstückig mit dem Mittenelement 28 ausgebildet. Vorteilhafterweise sind die erste, die zweite und die dritte Buchse 45 - 47 drehbar an der Welle 44 gelagert und über die Welle 44 miteinander verbunden.

In Figur 2 befinden sich das erste und das zweite Flügelelement 29, 30 in einer zweiten Position, wobei das erste und das zweite Flügelelement 29, 30 drehbar an den Wellen 39, 44 gelagert sind, sodass sie um Rotationsachsen A, B der Wellen 39, 44 in eine zweite Position gemäß Figur 3 verschwenkbar vorhanden sind. Vorteilhafterweise liegen die Rotationsachsen A, B in einer Lagerebene.

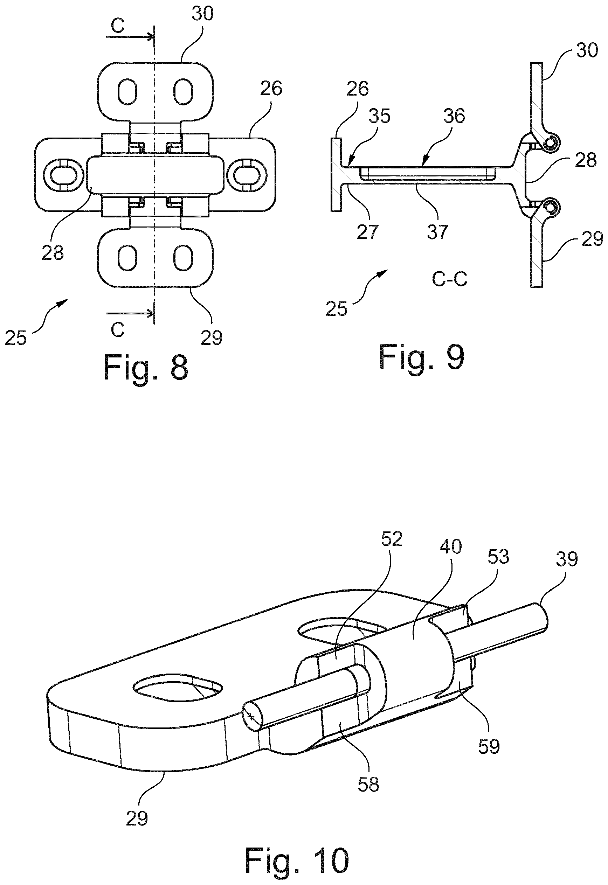

In der ersten Position der Flügelelemente 29, 30 gemäß Figur 3 stehen die Flügelelemente 29, 30 mit Anlageorganen 52, 53 (beispielhaft für das erste Flügelelement 29 in Figur 10 gezeigt) insbesondere unmittelbar an Anschlagorganen 54 - 57 des Mittenelements 28 an. Hierdurch begrenzen die Anschlagsorgane 54 - 57 des Mittenelements 28 eine Bewegung der Flügelelemente 29, 30 in eine erste Drehrichtung. In der zweiten Position der Flügelelemente 29, 30 gemäß Figur 2 stehen die Flügelelemente 29, 30 mit Anlageelementen 58, 59 (beispielhaft für das erste Flügelelement 29 in Figur 10 gezeigt) insbesondere unmittelbar an Anschlagelementen 60 - 63 des Mittenelements 28 an. Hierdurch begrenzen die Anschlagelemente 60 - 63 des Mittenelements 28 eine Bewegung der Flügelelemente 29, 30 in eine zweite Drehrichtung.

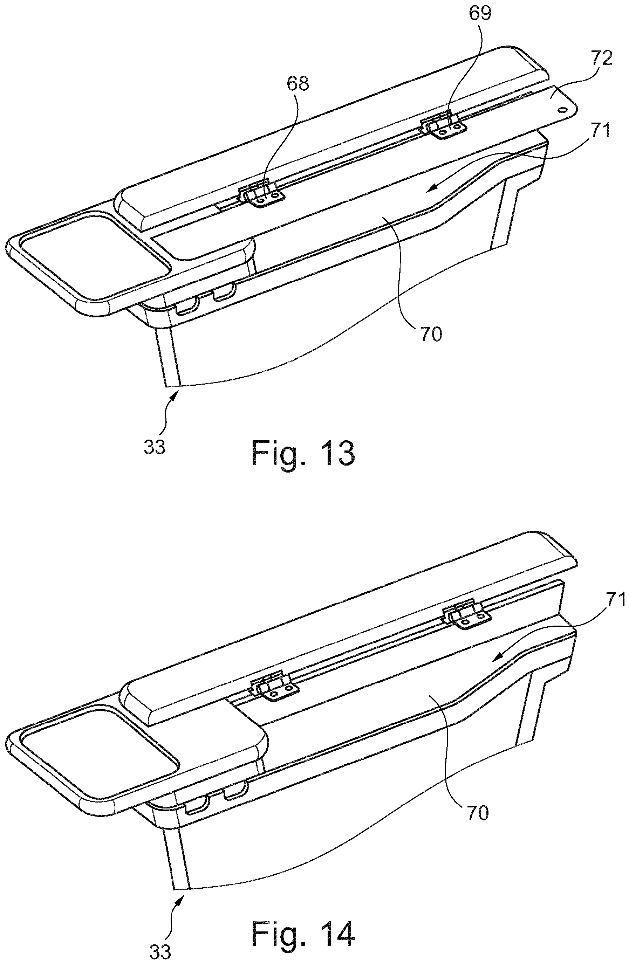

Figur 11 zeigt in einer perspektivischen Ansicht einen Teilausschnitt auf eine Mittellehne 33. Die Mittellehne 33 gemäß Figur 11 ist beispielsweise identisch zur Mittellehne 24 gemäß Figur 1 vorhanden. Die Mittellehne 33 umfasst zwei Scharniere 64, 65 (siehe auch Figuren 13 bis 15). Vorteilhafterweise sind die Scharniere 64, 65 identisch zum Scharnier 25 ausgebildet. Außerdem umfasst die Mittellehne 33 eine erste Armauflage 66 und eine zweite Armauflage 67. Vorteilhafterweise ist die erste Armauflage 66 mit ersten Flügelelementen der Scharniere 64, 65 verbunden. Beispielsweise ist die zweite Armauflage 67 mit zweiten Flügelelementen 68, 69 der Scharniere 64, 65 gekoppelt.

Außerdem umfasst die Mittellehne 33 zum Beispiel ein Blendenelement 70, welches eine Aufbewahrungsfläche 71 aufweist. Vorteilhafterweise umfasst die Mittellehne 33 zwei Blendenelemente 70 mit jeweils einer Aufbewahrungsfläche 71, 78. Die Aufbewahrungsfläche 71 des Blendenelements 70 erstreckt sich vorteilhafterweise in einer Aufbewahrungsebene C, wobei die Aufbewahrungsebene beispielsweise beabstandet und parallel zur Lagerebene L der Scharniere 64, 65 vorhanden ist (siehe auch Figur 12).

Die Armauflagen 66, 67 sind vorteilhafterweise zweiteilig ausgebildet. Beispielsweise umfassen die Armauflagen 66, 67 ein Armauflagenoberteil und ein Armauflagenunterteil. Das Armauflagenoberteil kann wiederum ebenfalls 2-teilig ausgebildet sein, bestehend aus einem Polsterelement, welches eine Auflagefläche zu Armauflage eines Nutzers aufweist, und einem darunter befindlichen Gehäuseelement. In den Figuren 11 bis 15 ist beispielhaft an der Armauflage 67 gezeigt, dass diese zweiteilig ausgebildet ist, wobei in Figur 13 beispielsweise das Armauflagenoberteil unsichtbar gehalten ist, sodass ein Armauflagenunterteil 72 der Armauflage 67 zu erkennen ist. Die Armauflagen 66, 67 umfassen Auflageflächen 73, 74. Die Auflageflächen 73, 74 erstrecken sich entlang einer Haupterstreckungsebene D.

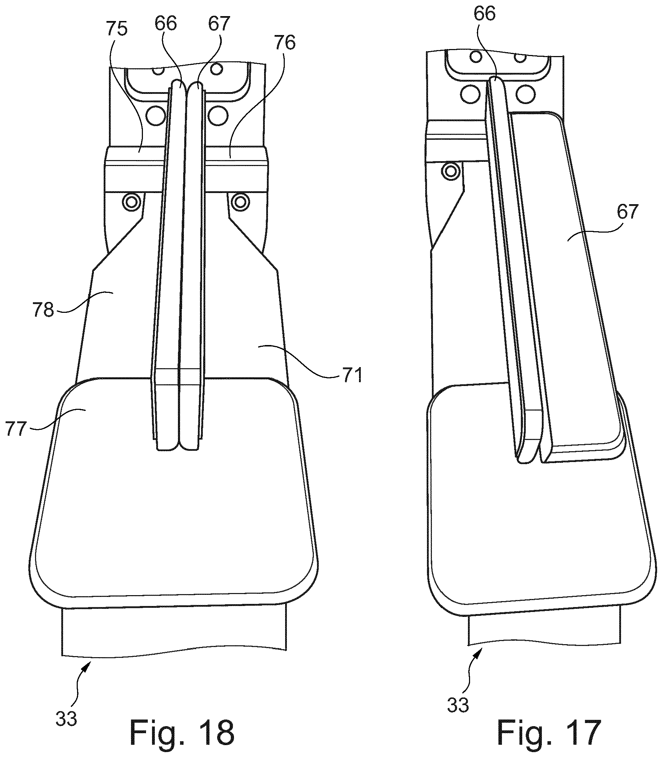

In Figuren 11 und 12 sind die Armauflagen 66, 67 in der zweiten Position an der Mittellehne 33 gezeigt. In Figur 17 befindet sich die erste Armauflage 66 in einer ersten Position und die zweite Armauflage 67 in der zweiten Position. In Figur 18 befinden sich sowohl die erste Armauflage 66 als auch die zweite Armauflage 67 in der ersten Position. In Figur 18 beispielhaft gezeigt ist, dass die erste und die zweite Armauflage 66, 67 in der ersten Position mit ihren Auflageflächen 73, 74 aneinander anstehend vorhanden sein können.

Die Mittellehne 33 umfasst vorteilhafterweise Anschlagsorgane in Form von Begrenzungsorganen 75 - 77 welche beispielsweise als eine Auflagefläche zur Auflage der Armauflagen 66, 67 ausgebildet sind (siehe auch Figur 18). Vorteilhafterweise liegen die Armauflagen 66, 67 in der zweiten Position an den Begrenzungsorganen 75 - 77 an, insbesondere auf.

**Bezugszeichenliste**

| | | | |
|---|---|---|---|
| 1 | Sitzreihe | 33 | Mittellehne |
| 2 | Sitzrichtung | 34 | Befestigungsfläche |
| 3 - 4 | Fluggastsitz | 35, 37 | Hauptseite |
| 5, 9 | Sitzboden | 36 | Ausnehmung |
| 6, 10 | Rückenlehne | 38, 43 | Drehgelenk |
| 7, 11 | Umhausung | 39, 44 | Welle |
| 8, 12 | Beinauflage | 40 - 42 | Buchse |
| 13 | Stützbein | 45 - 47 | Buchse |
| 14 | Kabinenboden | 48 - 51 | Montageelement |
| 15, 19 | Endbereich | 52, 53 | Anlageorgan |
| 16, 20 | Strebe | 54 - 57 | Anschlagorgan |
| 17, 18 | Montagestelle | 58, 59 | Anlageelement |
| 21 | Verstrebungselement | 60 - 63 | Anschlagelement |
| 22, 23 | Armlehne | 64, 65 | Scharnier |
| 24 | Mittellehne | 66, 67 | Armauflage |
| 25 | Scharnier | 68, 69 | Flügelelement |
| 26 | Montageorgan | 70 | Blendenelement |
| 27 | Verbindungsorgan | 71, 78 | Aufbewahrungsfläche |
| 28 | Mittenelement | 72 | Armauflagenunterteil |
| 29, 30 | Flügelelement | 73, 74 | Auflagefläche |
| 31, 32 | Durchgangsbohrung | 75 - 77 | Begrenzungsorgan |

## Patentansprüche

1. Mittellehne (33) einer Fluggastsitzreihe, mit einem Scharnier (25) und mit einer Armauflage (66, 67), wobei die Armauflage (66, 67) beweglich am Scharnier (25) angelenkt ist, wobei das Scharnier (25) ein Mittenelement (28) und zwei Flügelelemente (29, 30) aufweist, wobei ein erstes Flügelelement (29) um eine erste Rotationsachse drehbar am Mittenelement (28) angelenkt ist, wobei ein zweites Flügelelement (30) um eine zweite Rotationsachse drehbar am Mittenelement (28) angelenkt ist, wobei das erste Flügelelement (29) ein Montageelement (48, 49) aufweist, um einen Flügel oder eine Klappe anzuordnen, wobei das zweite Flügelelement (30) ein weiteres Montageelement (50, 51) aufweist, um einen weiteren Flügel oder eine weitere Klappe anzuordnen, wobei das Scharnier (25) ein Montageorgan (26) aufweist, um das Mittenelement (28) an einem Fluggastsitz zu befestigen, sodass im montierten Zustand des Scharniers (25) am Fluggastsitz und im angeordneten Zustand der Flügel oder der Klappen, die Flügel oder die Klappen relativ zum verbleibenden Fluggastsitz beweglich vorhanden sind, wobei die erste und die zweite Rotationsachse in einer Lagerebene sich erstreckend und voneinander beabstandet am Scharnier (25) vorhanden sind, wobei das erste Flügelelement (29) mit einer ersten Buchse (40) am Mittenelement (28) angelenkt ist, wobei die erste Buchse (40) des ersten Flügelelements (29) entlang der ersten Rotationsachse zwischen einer zweiten und einer dritten Buchse (41, 42) des Mittenelements (28) vorhanden ist, wobei die erste bis dritte Buchse (40 - 42) an einer ersten Welle (39) des Scharniers (25) gelagert sind, wobei das zweite Flügelelement (30) mit einer vierten Buchse (45) am Mittenelement (28) angelenkt ist, wobei die vierte Buchse (45) des ersten Flügelelements (29) entlang der zweiten Rotationsachse zwischen einer fünften und einer sechsten Buchse (46, 47) des Mittenelements (28) vorhanden ist, wobei die vierte bis sechste Buchse (45 - 47) an einer zweiten Welle (44) des Scharniers (25) gelagert sind, wobei die Mittellehne (33) eine Aufbewahrungsfläche (71) aufweist, welche sich in einer Aufbewahrungsebene erstreckt, wobei das Scharnier (25) im Bereich der Aufbewahrungsfläche (71) über das Montageorgan (26) an der Mittellehne (33) angeordnet ist, wobei die Aufbewahrungsebene von der Lagerebene der Rotationsachsen beabstandet vorhanden ist.

2. Mittellehne (33) nach dem vorangegangenen Anspruch 1, **dadurch gekennzeichnet, dass** das Scharnier (25) ein Verbindungsorgan (27) aufweist, welches in einer Haupterstreckungsrichtung quer zur Lagerebene der Rotationsachsen sich erstreckend vorhanden ist, wobei an einem ersten Ende des Verbindungsorgans (27) das Mittenelement (28) angeordnet ist, wobei an einem zweiten Ende des Verbindungsorgans (27), welches beabstandet und gegenüberliegend zum ersten Ende des Verbindungsorgans (27) vorhanden ist, das Montageorgan (26) vorhanden ist.

3. Mittellehne (33) nach dem vorangegangenen Anspruch 2, **dadurch gekennzeichnet, dass** das Montageorgan (26) sich in einer Ebene quer zur Haupterstreckungsebene des Verbindungsorgans (27) erstreckt, sodass das Montageorgan (26) und das Verbindungsorgan (27) T-förmig vorhanden sind.

4. Mittellehne (33) nach einem der vorangegangenen Ansprüche, **dadurch gekennzeichnet, dass** das Mittenelement (28) ein erstes und ein zweites Anschlagorgan (54 - 57) aufweist, wobei in einer ersten Position der Flügelelemente (29, 30) das erste Flügelelement (29) am ersten Anschlagorgan (54, 55) und das zweite Flügelelement (30) am zweiten Anschlagorgan (56, 57) ansteht.

5. Mittellehne (33) nach einem der vorangegangenen Ansprüche, **dadurch gekennzeichnet, dass** das Mittenelement (28) ein erstes und ein zweites Anschlagelement (60 - 63) aufweist, wobei in einer zweiten Position der Flügelelemente (29, 30) das erste Flügelelement (29) am ersten Anschlagelement (60, 61) und das zweite Flügelelement (30) am zweiten Anschlagelement (62, 63) ansteht.

6. Mittellehne (33) nach einem der vorangegangenen Ansprüche, **dadurch gekennzeichnet, dass** die Mittellehne (33) zwei Aufbewahrungsflächen (71, 78) aufweist, welche sich in der selben Aufbewahrungsebene erstrecken und voneinander beabstandet vorhanden sind.

7. Mittellehne (33) nach einem der vorangegangenen Ansprüche 2 bis 6, **dadurch gekennzeichnet, dass** das Verbindungsorgan (27) des Scharniers (25) von der Aufbewahrungsebene abstehend vorhanden ist.

8. Mittellehne (33) nach einem der vorangegangenen Ansprüche, **dadurch gekennzeichnet, dass** die Mittellehne (33) zwei Armauflagen (66, 67) aufweist, wobei die Mittellehne (33) zwei Anschlagsorgane (75 - 77) aufweist, wobei jeweils eine Armauflage (66, 67) in einer ersten Position an jeweils einem Anschlagsorgan (75 - 77) anliegt, wobei jede Armauflage (66, 67) eine Auflagefläche aufweist, wobei die Auflageflächen sich in der ersten Position in Richtung der Lagerebene erstrecken.

9. Mittellehne (33) nach einem der vorangegangenen Ansprüche, **dadurch gekennzeichnet, dass** die Mittellehne (33) zwei Armauflagen (66, 67) aufweist, wobei die beiden Armauflagen (66, 67) jeweils in eine zweite Position bewegbar vorhanden sind, wobei in der jeweiligen zweiten Position die beiden Armauflagen (66, 67) aneinander anstehend vorhanden sind.

10. Fluggastsitz (1), insbesondere Fluggastdoppelsitz, mit einer Mittellehne (33) nach einem der vorangegangenen Ansprüche.

11. Flugzeug mit einem Fluggastsitz (1) nach Anspruch 10.

## Claims

1. Middle rest (33) of an air passenger seat row with a hinge (25) and with an armrest (66, 67), the armrest (66, 67) being articulated movably on the hinge (25), the hinge (25) having a middle element (28) and two wing elements (29, 30), a first wing element (29) being articulated on the middle element (28) such that it can be rotated about a first rotational axis, a second wing element (30) being articulated on the middle element (28) such that it can be rotated about a second rotational axis, the first wing element (29) having a mounting element (48, 49), in order to arrange a wing or a flap, the second wing element (30) having a further mounting member (50, 51), in order to arrange a further wing or a further flap, the hinge (25) having a mounting member (26), in order to fasten the middle element (28) to an air passenger seat, with the result that, in the mounted state of the hinge (25) on the air passenger seat and in the arranged state of the wings or the flaps, the wings or flaps are present such that they can be moved relative to the remaining air passenger seat, the first and the second rotational axes being arranged on the hinge (25) extending in a bearing plane and spaced apart from one another, the first wing element (29) being articulated on the middle element (28) by way of a first bushing (40), the first bushing (40) of the first wing element (29) being present along the first rotational axis between a second and a third bushing (41, 42) of the middle element (28), the first to third bushing (40-42) being mounted on a first shaft (39) of the hinge (25), the second wing element (30) being articulated on the middle element (28) by way of a fourth bushing (45), the fourth bushing (45) of the first wing element (29) being present along the second rotational axis between a fifth and a sixth bushing (46, 47) of the middle element (28), the fourth to sixth bushing (45-47) being mounted on a second shaft (44) of the hinge (25), the middle rest (33) having a storage surface (71) which extends in a storage plane, the hinge (25) being arranged in the region of the storage surface (71) via the mounting member (26) on the middle rest (33), the storage plane being present spaced apart from the bearing plane of the rotational axes.

2. Middle rest (33) according to the preceding Claim 1, **characterized in that** the hinge (25) has a connecting member (27) which is present extending in a main extent direction transversely with respect to the bearing plane of the rotational axes, the middle element (28) being arranged at a first end of the connecting member (27), the mounting member (26) being present at a second end of the connecting member (27) which is present spaced apart from and lying opposite the first end of the connecting member (27).

3. Middle rest (33) according to the preceding Claim 2, **characterized in that** the mounting member (26) extends in a plane transversely with respect to the main extent plane of the connecting member (27), with the result that the mounting member (26) and the connecting member (27) are present in a T-shaped manner.

4. Middle rest (33) according to one of the preceding claims, **characterized in that** the middle element (28) has a first and a second stop member (54-57), the first wing element (29) lying against the first stop member (54, 55) and the second wing element (30) lying against the second stop member (56, 57) in a first position of the wing elements (29, 30) .

5. Middle rest (33) according to one of the preceding claims, **characterized in that** the middle element (28) has a first and a second stop element (60-63), the first wing element (29) lying against the first stop element (60, 61) and the second wing element (30) lying against the second stop element (62, 63) in a second position of the wing elements (29, 30) .

6. Middle rest (33) according to one of the preceding claims, **characterized in that** the middle rest (33) has two storage surfaces (71, 78) which extend in the same storage plane and are present spaced apart from one another.

7. Middle rest (33) according to one of the preceding Claims 2 to 6, **characterized in that** the connecting member (27) of the hinge (25) is present so as to protrude from the storage plane.

8. Middle rest (33) according to one of the preceding claims, **characterized in that** the middle rest (33) has two armrests (66, 67), the middle rest (33) having two stop members (75-77), in each case one armrest (66, 67) bearing in a first position against in each case one stop member (75-77), each armrest (66, 67) having a rest surface, the rest surfaces extending in the first position in the direction of the bearing plane.

9. Middle rest (33) according to one of the preceding claims, **characterized in that** the middle rest (33) has two armrests (66, 67), the two armrests (66, 67) being present such that they can each be moved into a second position, the two armrests (66, 67) being present so as to lie against one another in the respective second position.

10. Air passenger seat (1), in particular air passenger double seat, with a middle rest (33) according to one of the preceding claims.

11. Aircraft with an air passenger seat (1) according to Claim 10.

## Revendications

1. Accoudoir central (33) d'une rangée de sièges de passagers d'aéronef, comportant une charnière (25) et comportant un repose-bras (66, 67), le repose-bras (66, 67) étant articulé sur la charnière (25) de manière mobile, la charnière (25) présentant un élément central (28) et deux éléments battants (29, 30), un premier élément battant (29) étant articulé sur l'élément central (28) de manière à pouvoir tourner autour d'un premier axe de rotation, un deuxième élément battant (30) étant articulé sur l'élément central (28) de manière à pouvoir tourner autour d'un deuxième axe de rotation, le premier élément battant (29) présentant un élément de montage (48, 49), afin d'agencer un battant ou un volet, le deuxième élément battant (30) présentant un autre élément de montage (50, 51), afin d'agencer un autre battant ou un autre volet, la charnière (25) présentant un organe de montage (26), afin de fixer l'élément central (28) à un siège de passager d'aéronef, de sorte que, dans l'état monté de la charnière (25) sur le siège de passager d'aéronef et dans l'état agencé des battants ou des volets, les battants ou les volets sont prévus de manière mobile par rapport au siège de passager d'aéronef restant, le premier et le deuxième axe de rotation étant prévus de manière à s'étendre dans un plan de support et de manière espacée l'un de l'autre sur la charnière (25), le premier élément battant (29) étant articulé sur l'élément central (28) à l'aide d'une première douille (40), la première douille (40) du premier élément battant (29) étant prévue le long du premier axe de rotation entre une deuxième et une troisième douille (41, 42) de l'élément central (28), les première à troisième douilles (40 - 42) étant montées sur un premier arbre (39) de la charnière (25), le deuxième élément battant (30) étant articulé sur l'élément central (28) à l'aide d'une quatrième douille (45), la quatrième douille (45) du premier élément battant (29) étant prévue le long du deuxième axe de rotation entre une cinquième et une sixième douille (46, 47) de l'élément central (28), les quatrième à sixième douilles (45 - 47) étant montées sur un deuxième arbre (44) de la charnière (25), l'accoudoir central (33) présentant une surface de stockage (71), laquelle s'étend dans un plan de stockage, la charnière (25) étant agencée dans la région de la surface de stockage (71) par le biais de l'organe de montage (26) sur l'accoudoir central (33), le plan de stockage étant prévu de manière espacée du plan de support des axes de rotation.

2. Accoudoir central (33) selon la revendication 1 précédente, **caractérisé en ce que** la charnière (25) présente un organe de liaison (27), lequel est prévu de manière à s'étendre dans une direction d'étendue principale transversalement au plan de support des axes de rotation, l'élément central (28) étant agencé à une première extrémité de l'organe de liaison (27), l'organe de montage (26) étant prévu à une deuxième extrémité de l'organe de liaison (27), laquelle est prévue de manière espacée de, et opposée à, la première extrémité de l'organe de liaison (27).

3. Accoudoir central (33) selon la revendication 2 précédente, **caractérisé en ce que** l'organe de montage (26) s'étend dans un plan transversalement au plan d'étendue principale de l'organe de liaison (27), de sorte que l'organe de montage (26) et l'organe de liaison (27) soient prévus en forme de T.

4. Accoudoir central (33) selon l'une des revendications précédentes, **caractérisé en ce que** l'élément central (28) présente un premier et un deuxième organe de butée (54 - 57) et, dans une première position des éléments battants (29, 30), le premier élément battant (29) s'appuyant contre le premier organe de butée (54, 55) et le deuxième élément battant (30) s'appuyant contre le deuxième organe de butée (56, 57).

5. Accoudoir central (33) selon l'une des revendications précédentes, **caractérisé en ce que** l'élément central (28) présente un premier et un deuxième élément de butée (60 - 63) et, dans une deuxième position des éléments battants (29, 30), le premier élément battant (29) s'appuyant contre le premier élément de butée (60, 61) et le deuxième élément battant (30) s'appuyant contre le deuxième élément de butée (62, 63).

6. Accoudoir central (33) selon l'une des revendications précédentes, **caractérisé en ce que** l'accoudoir central (33) présente deux surfaces de stockage (71, 78), lesquelles s'étendent dans le même plan de stockage et sont prévues de manière espacée l'une de l'autre.

7. Accoudoir central (33) selon l'une des revendications 2 à 6 précédentes, **caractérisé en ce que** l'organe de liaison (27) de la charnière (25) est prévu de manière à faire saillie à partir du plan de stockage.

8. Accoudoir central (33) selon l'une des revendications précédentes, **caractérisé en ce que** l'accoudoir central (33) présente deux repose-bras (66, 67), l'accoudoir central (33) présentant deux organes de butée (75 - 77), un repose-bras (66, 67) s'appuyant respectivement contre un organe de butée (75 - 77) respectivement dans une première position, chaque repose-bras (66, 67) présentant une surface d'appui, les surfaces d'appui s'étendant dans la direction du plan de support dans la première position.

9. Accoudoir central (33) selon l'une des revendications précédentes, **caractérisé en ce que** l'accoudoir central (33) présente deux repose-bras (66, 67), les deux repose-bras (66, 67) étant prévus de manière déplaçable dans une deuxième position respectivement, les deux repose-bras (66, 67) étant prévus de manière à s'appuyer l'un contre l'autre dans la deuxième position respective.

10. Siège de passager d'aéronef (1), en particulier double siège de passager d'aéronef, comportant un accoudoir central (33) selon l'une des revendications précédentes.

11. Aéronef comportant un siège de passager d'aéronef (1) selon la revendication 10.
